(19) Europäisches Patentamt
European Patent Office
Office européen des brevets

(11) EP 4 588 970 A1

(12) EUROPEAN PATENT APPLICATION
published in accordance with Art. 153(4) EPC

(43) Date of publication:
**23.07.2025 Bulletin 2025/30**

(21) Application number: **23865590.6**

(22) Date of filing: **14.09.2023**

(51) International Patent Classification (IPC):
***C08K 5/11*** *(2006.01)* ***C08L 101/00*** *(2006.01)*
***C08L 71/00*** *(2006.01)* ***C09K 3/00*** *(2006.01)*
***F16F 15/02*** *(2006.01)*

(52) Cooperative Patent Classification (CPC):
**C08K 5/11; C08L 71/00; C08L 101/00; C09K 3/00; F16F 15/02**

(86) International application number:
**PCT/JP2023/033489**

(87) International publication number:
**WO 2024/058241 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022147504**

(71) Applicant: **Nippon Shokubai Co., Ltd.**
**Osaka-shi, Osaka 541-0043 (JP)**

(72) Inventor: **KATAKURA, Naoki**
**Suita-shi, Osaka 564-0034 (JP)**

(74) Representative: **Cabinet Beau de Loménie**
**103, rue de Grenelle**
**75340 Paris Cedex 07 (FR)**

# (54) RESIN COMPOSITION FOR DAMPING MATERIAL

(57) The present invention aims to provide a resin composition for damping materials which has excellent low-temperature drying properties and excellent coating stability. The present invention relates to a resin composition for damping materials, the composition containing polymer emulsion particles and having multiple peaks in a particle size distribution measured using a particle size distribution analyzer by dynamic light scattering.



Processed by Luminess, 75001 PARIS (FR)

## Description

TECHNICAL FIELD

The present invention relates to resin compositions for damping materials. The resin compositions for damping materials of the present invention can be used particularly for vehicles.

BACKGROUND ART

Damping materials are used to prevent vibration and noise in various structures to ensure sustained quietness and are used in underfloor spaces of automobile interior, as well as for a wide range of other applications including railway vehicles, ships, aircraft, electrical equipment, building structures, and construction equipment. Conventional materials having been used for such damping materials include molded products such as plate-like molded bodies and sheet-like molded bodies made of vibration-absorbing materials. In recent years, from the standpoint of environmental protection and occupational health, the release of volatile organic compounds (VOCs) from solvent-based resin compositions into the atmosphere has become a problem. In response to this, the shift from solvent-based resin compositions to water-based resin compositions is progressing.

For example, Patent Literature 1 describes a resin composition for damping materials that contains an emulsion obtained by polymerizing a monomer component. The composition further contains a component having a sulfosuccinic acid (salt) backbone in an amount of 50% by mass or more based on 100% by mass of an anionic surfactant in the composition. The resin composition can provide a coating that has an excellent appearance and can exhibit remarkably excellent damping properties over a wide temperature range.

CITATION LIST

- Patent Literature

Patent Literature 1: JP 2017-048364 A

SUMMARY OF INVENTION

- Technical Problem

However, the film-forming properties during drying of water-based resin compositions depend mainly on the evaporation rate of water, so that the film-formation during drying of water-based resin compositions is slower than that of solvent-based coating materials, and consumes more energy during drying. Use of an aqueous emulsion is preferred from the viewpoint of VOC. Still, to further reduce the environmental load, there is a demand for a water-based resin composition capable of reducing the amount of energy consumed during drying.

The present inventor has conducted studies on resin compositions for damping materials that can reduce energy consumption while maintaining the performance required for such resin compositions, specifically, on resin compositions for damping materials that have excellent low-temperature drying properties and excellent coating stability.

- Solution to Problem

The present inventor has conducted studies in consideration of the above-mentioned problems, and has found that a resin composition for damping materials which contains polymer emulsion particles and has multiple peaks in a particle size distribution (particle diameter distribution) measured using a particle size distribution analyzer by dynamic light scattering has excellent low-temperature drying properties and excellent coating stability. Thereby, the present invention has been completed.

- Advantageous Effects of Invention

The present invention provides a resin composition for damping materials which has excellent low-temperature drying properties and excellent coating stability.

DESCRIPTION OF EMBODIMENTS

<Resin composition for damping material>

The resin composition for damping materials of the present disclosure contains polymer emulsion particles.

The resin composition for damping materials of the present disclosure has multiple peaks in a particle size distribution measured using a particle size distribution analyzer by dynamic light scattering. The presence of multiple peaks in the particle size distribution is expected to improve the low-temperature drying properties and coating stability. In other words, the number of peaks in the particle size distribution of the resin composition for damping materials of the present disclosure (also referred to as the number of particle diameter distribution peaks) is more than one. The number of peaks is usually, but not limited to, 10 or less, preferably 5 or less, more preferably 2.

The reason why the presence of multiple peaks in the particle size distribution allows improvement of the low-temperature drying properties and coating stability is considered as follows. The presence of multiple components with different particle sizes may change the state of packed particles (packing state), providing a resin composition containing polymer emulsion particles with a low viscosity. Such a resin composition, even at a high solid concentration, can maintain good handleability for forming a coating. Further, the resin composition can have a reduced water content, resulting in excellent low-temperature drying properties. Furthermore, the resin composition is formed into a densely packed film, resulting in a crack-resistant stable coating.

In the particle size distribution of the resin composition for damping materials of the present disclosure, the particle diameter distribution peak with the largest peak intensity is defined as a first peak, the particle diameter distribution peak with the next largest peak intensity is defined as a second peak, and other peaks are defined in the same way.

The particle size distribution of the resin composition for damping materials of the present disclosure preferably has the first peak in the range of 300 nm or more and 800 nm or less and the second peak in the range of 50 nm or more and 150 nm or less.

In the particle size distribution of the resin composition for damping materials of the present disclosure, the particle size at the top of the first peak (also referred to as a particle size of the first peak) is preferably in the range of 300 nm or more and 800 nm or less. The particle size at the top of the second peak (also referred to as a particle size of the second peak) is preferably in the range of 50 nm or more and 150 nm or less.

In a particle size distribution of the polymer emulsion particles disclosed herein, the intensity ratio (volume ratio) of the first peak in the range of 300 nm or more and 800 nm or less to the second peak in the range of 50 nm or more and 150 nm or less is preferably 10:0.3 to 10:10, more preferably 10:0.5 to 10:7, still more preferably 10:0.9 to 10:4.

The total volume percentage of the second peak and peaks lower than the second peak in the entire particle size distribution of the resin composition for damping materials of the present disclosure is preferably 3 vol% or higher, more preferably 5 vol% or higher, still more preferably 8 vol% or higher. The total volume percentage of the second peak and peaks lower than the second peak is preferably 50 vol% or lower, more preferably 40 vol% or lower, still more preferably 30 vol% or lower. Herein, the second peak and peaks lower than the second peak in the entire particle size distribution refer to peaks other than the particle diameter distribution peak with the largest peak intensity (the first peak), and the total volume percentage of the second peak and peaks lower than the second peak refers to the total volume percentage of the particle diameter distribution peaks other than the first peak (for example, the total volume percentage of the particle diameter distribution peak including the second peak and the particle diameter distribution peak including the third peak). When the peaks overlap each other, the intensity ratio (volume ratio) thereof is calculated by the following method. For example, when the first peak overlaps the second peak having a particle size at the top of the peak smaller than that of the first peak, the particle size at the minimum value between the first peak top and the second peak top is set as the threshold, with the range including the threshold and above defined as the first peak and the range including the threshold and below defined as the second peak. The intensity ratio (volume ratio) of the first peak to the second peak is then calculated.

The resin composition for damping materials having the above particle size distribution can be easily obtained, for example, by adding (post-adding) an emulsifier during the polymerization step separately from the emulsifier used in the monomer emulsion, as described later. The resin composition for damping materials having the above particle size distribution can also be obtained by mixing two or more types of polymer emulsion particles having different particle diameter distributions.

In the particle size distribution of the resin composition for damping materials of the present disclosure, the particles of the first peak and the particles of the second peak preferably have a uniform molecular weight. The uniform molecular weight is expected to improve the damping properties. The phrase "the particles of the first peak and the particles of the second peak have a uniform molecular weight" intends to mean that the resin composition for damping materials has no multiple peak tops in the molecular weight measurement of the resin composition and has a narrow distribution where the molecular weight distribution Mw/Mn is 4.5 or less. The molecular weight distribution of the resin composition for damping materials of the present disclosure is preferably 3.5 or less, more preferably 2.5 or less.

The reason why the damping properties are improved when the particles of the first peak and the particles of the second peak in the particle size distribution have a uniform molecular weight is thought to be because the reduction in high molecular weight components enhances the mobility of molecular chains.

The resin composition for damping materials in which the particles of the first peak and the particles of the second peak have a uniform molecular weight can be easily obtained, for example, by adding (post-adding) a polymerization chain transfer agent during the polymerization step separately from the polymerization chain transfer agent used in the monomer emulsion, as described later. The resin composition can also be obtained by mixing two or more types of polymer emulsion particles with different particle size distributions but having a uniform molecular weight.

The particle size distribution is measured by the method described in the Examples.

(Polymer emulsion particles)

The polymer emulsion particles disclosed herein include an emulsion obtained by polymerizing a monomer component and are emulsion particles containing a polymer having a structural unit derived from a monomer. The structural unit derived from a monomer is not limited to a structural unit formed by polymerizing a monomer, and may be, for example, a structural unit formed by a post-reaction after polymerization.

The polymer disclosed herein may be any polymer and may optionally have a structural unit derived from a carboxylic acid (salt) group-containing monomer. The carboxylic acid (salt) group means a carboxylic acid group and/or a carboxylate group.

Preferred examples of a salt of the structural unit derived from a carboxylate group-containing monomer disclosed herein include a metal salt, an ammonium salt, and an organic amine salt. Suitable examples of the metal atom of the metal salt include monovalent metal atoms such as lithium, sodium, potassium, and other alkali metal atoms; divalent metal atoms such as calcium and magnesium; and trivalent metal atoms such as aluminum and iron. Suitable examples of the organic amine salt include alkanolamine salts such as an ethanolamine salt, a diethanolamine salt, and a triethanolamine salt; and a triethylamine salt.

The structural unit derived from a carboxylic acid (salt) group-containing monomer disclosed herein is preferably a structural unit derived from a (meth)acrylic acid monomer. In other words, the polymer emulsion particles disclosed herein preferably contain a (meth)acrylic polymer. The (meth)acrylic polymer refers to a polymer having a structural unit derived from a (meth)acrylic acid monomer.

The (meth)acrylic polymer disclosed herein preferably contains a structural unit derived from a (meth)acrylic acid monomer and a structural unit derived from a different copolymerizable unsaturated monomer. The presence of a structural unit derived from a (meth)acrylic acid monomer improves the dispersibility of inorganic pigments and the like in a coating material containing the resin composition for damping materials of the present invention, resulting in a coating with excellent performance. Also, the presence of a structural unit derived from a different copolymerizable unsaturated monomer enables easy adjustment of the acid value, Tg, and other properties of the polymer.

The (meth)acrylic acid monomer disclosed herein contains at least one group selected from an acryloyl group, a methacryloyl group, and a group obtained by replacing a hydrogen atom in any of these groups with another atom or an atomic group, where the carbonyl group of the at least one group forms a carboxy group (-COOH group), a salt of a carboxy group, or an acid anhydride group (-C(=O)-O-C(=O)- group). The (meth)acrylic acid monomer disclosed herein is preferably (meth)acrylic acid (salt).

Preferred examples of the salt of the carboxy group of the (meth)acrylic acid monomer disclosed herein include a metal salt, an ammonium salt, and an organic amine salt. Examples of the metal salt and organic amine salt include those described as the salts of a carboxylate group-containing monomer unit.

Examples of the different copolymerizable unsaturated monomer disclosed herein include a (meth)acrylic monomer other than the (meth)acrylic acid monomer and an aromatic ring-containing unsaturated monomer. The (meth)acrylic monomer other than the (meth)acrylic acid monomer refers to a monomer that contains an acryloyl group, a methacryloyl group, or a group obtained by replacing a hydrogen atom in any of these groups with another atom or an atomic group and in which the carboxy group is esterified. The (meth)acrylic monomer also refers to a derivative of such a monomer.

Examples of the (meth)acrylic monomer other than the (meth)acrylic acid monomer disclosed herein include methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isononyl methacrylate, decyl acrylate, decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, 2-hydroxyethyl methacrylate, 2-hydroxypropyl acrylate, 2-hydroxypropyl methacrylate, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, and allyl methacrylate;

and esterified products of (meth)acrylic acid monomers other than these listed above. One or two or more of these may be preferably used.

Examples of the aromatic ring-containing unsaturated monomer disclosed herein include divinylbenzene, styrene, $\alpha$-methylstyrene, vinyl toluene, and ethyl vinyl benzene. Preferred is styrene.

The amount of the structural unit derived from a (meth)acrylic acid monomer in 100 parts by mass of the (meth) acrylic polymer disclosed herein is preferably 0.1 parts by mass or more, more preferably 0.3 parts by mass or more, still more preferably 0.5 parts by mass or more, particularly preferably 0.7 parts by mass or more. The amount of the structural unit derived from a (meth)acrylic acid monomer is preferably 5 parts by mass or less, more preferably 4 parts by mass or less, still more preferably 3 parts by mass or less.

The amount of the structural unit derived from a different copolymerizable unsaturated monomer in 100 parts by mass of the (meth)acrylic polymer disclosed herein is preferably 95 parts by mass or more, more preferably 96 parts by mass or more, still more preferably 97 parts by mass or more. The amount of the structural unit derived from a different copolymerizable unsaturated monomer is preferably 99.9 parts by mass or less, more preferably 99.7 parts by mass or less, still more preferably 99.5 parts by mass or less, particularly preferably 99.3 parts by mass or less.

The amount of the structural unit derived from a (meth)acrylic monomer other than the (meth)acrylic acid monomer in 100 parts by mass of the (meth)acrylic polymer disclosed herein is preferably 20 parts by mass or more, more preferably 40 parts by mass or more, still more preferably 60 parts by mass or more. The amount of the structural unit derived from a (meth)acrylic monomer other than the (meth)acrylic acid monomer is preferably 99.9 parts by mass or less, more preferably 99.7 parts by mass or less, still more preferably 99.5 parts by mass or less.

The amount of the structural unit derived from an aromatic ring-containing unsaturated monomer in 100 parts by mass of the (meth)acrylic polymer disclosed herein is preferably 1 part by mass or more, more preferably 5 parts by mass or more, still more preferably 10 parts by mass or more, and may be 20 parts by mass or more or 40 parts by mass or more. The amount of the structural unit derived from an aromatic ring-containing unsaturated monomer is preferably 80 parts by mass or less, more preferably 70 parts by mass or less, still more preferably 60 parts by mass or less.

The resin composition for damping materials of the present disclosure may contain one or two or more polymers. When the polymer emulsion particles disclosed herein include two or more types of polymer emulsion particles in the resin composition for damping materials of the present disclosure, the resin composition may be a mixture obtained by mixing (blending) two or more types of polymer emulsion particles, or may be an emulsion composite of two or more polymer chains which is obtained by producing an emulsion containing two or more polymer chains in a series of production steps (e.g., multistage polymerization). To obtain an emulsion containing two or more types of polymer emulsion particles in a series of production steps, the production conditions such as conditions for dropwise addition of monomers are appropriately set. The composite of two or more polymer chains may have, for example, a core and a shell as described below.

In other words, the resin composition for damping materials of the present disclosure may be a composition containing a single-layer polymer emulsion particle consisting of a core, a core-shell particle having a core and a shell, or a mixture obtained by mixing these.

An example of the polymer emulsion particle having a core and a shell disclosed herein is a particle consisting of two polymers, one of which forms the core and the other forms the shell.

When the polymer emulsion particles disclosed herein contain a (meth)acrylic polymer and the (meth)acrylic polymer has a structural unit derived from a (meth)acrylic acid monomer, the (meth)acrylic acid monomer may be contained in either a monomer component forming the core of the polymer emulsion particle or a monomer component forming the shell of the polymer emulsion particle, or may be contained in both of these.

When the polymer emulsion particle disclosed herein is in the form of a composite of two or more polymer chains, the composite may have a homogeneous structure in which one polymer chain and the other are completely mixed with each other and therefore cannot be distinguished from each other, or a heterogeneous structure in which these polymers are not completely mixed with each other (e.g., a core-shell composite structure or a microdomain structure). Of these structures, for example, the core-shell composite structure is preferred for the production of stable polymer emulsion particles with sufficient performance as the polymer emulsion particles. The polymer emulsion particles with a core-shell composite structure exhibit excellent damping properties in a wide practical temperature range. The polymer emulsion particles also exhibit, especially in a higher temperature range, better damping properties than resin compositions for damping materials with other structures. Thus, such polymer emulsion particles can exhibit damping properties in a wide practical temperature range from room temperature to high temperatures. In the core-shell composite structure, the surface of the core is preferably covered with the shell. In this case, the surface of the core is preferably completely covered with the shell, but may not be completely covered therewith. For example, the surface of the core may be covered in a mesh pattern or may be partly exposed.

The polymer emulsion particles disclosed herein may contain a compound having a sulfosuccinic acid (salt) backbone in addition to the above-mentioned polymer.

The compound having a sulfosuccinic acid (salt) backbone disclosed herein may be a compound represented by

the following formula (1):

[Chem. 1]

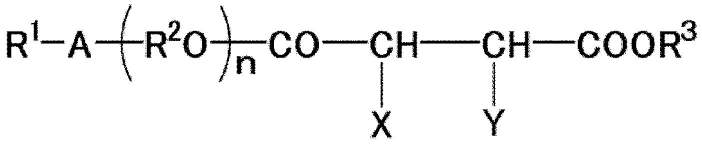

(1)

wherein $R^1$ represents a hydrogen atom or a C1-C30 monovalent alkyl group; -A- represents -O- or -NH-; $R^2$ represents a C1-C30 alkylene group; the average number n of moles added is 0 to 200; X and Y are the same as or different from each other and each represent a hydrogen atom or a sulfonic acid (salt) group; at least one of X or Y represents a sulfonic acid (salt) group; and $R^3$ represents a hydrogen atom, an alkyl group, a metal salt, an ammonium salt, or an organic amine salt.

$R^1$ preferably represents a C1-C30 monovalent alkyl group. The number of carbon atoms of $R^1$ is preferably 4 or more, more preferably 8 or more, still more preferably 12 or more. The number of carbon atoms of $R^1$ is preferably 25 or less, more preferably 20 or less.

The monovalent alkyl group is preferably a primary alkyl group or a secondary alkyl group.

$R^2$s preferably mainly include a C2-C4 alkylene group such as an ethylene group, a propylene group, or a butylene group, more preferably an ethylene group.

The term "mainly" herein means that when the $(R^2O)_n$ moiety includes two or more oxyalkylene groups, the above-described alkylene group accounts for preferably 50 to 100 mol% of the total number of $R^2$s.

In the $(R^2O)_n$ moiety, $R^2$s more preferably consist of ethylene groups.

In a preferred embodiment of the resin composition for damping materials of the present invention, the average number n of moles added is 3 to 200. To further enhance the function of the compound having a sulfosuccinic acid (salt) backbone as an emulsifier and to improve damping properties, the average number n of moles added is more preferably 4 or more, still more preferably 5 or more, further more preferably 6 or more, particularly preferably 7 or more. The average number n of moles added is more preferably 100 or less, still more preferably 50 or less, further more preferably 20 or less, particularly preferably 10 or less.

X and Y are the same as or different from each other and each represent a hydrogen atom or a sulfonic acid (salt) group. At least one of X or Y represents a sulfonic acid (salt) group. Preferably, one of X and Y represents a sulfonic acid (salt) group, and the other represents a hydrogen atom. In other words, the polymer emulsion particles disclosed herein may contain a sulfosuccinic acid half ester (salt) in addition to the above-mentioned polymer.

The sulfosuccinic acid half ester (salt) disclosed herein may be a compound represented by the following formula (2):

[Chem. 2]

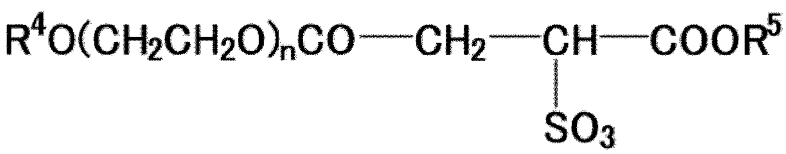

(2)

wherein $R^4$ represents a C12-C14 secondary alkyl group; $R^5$ represents a hydrogen atom, an alkyl group, a metal salt, an ammonium salt, or an organic amine salt; and n represents an average number of moles added.

A preferred range of n in the formula (2) is the same as the above-described preferred range of the average number n of moles added in the formula (1).

The compound having a sulfosuccinic acid (salt) backbone disclosed herein may be used as an emulsifier to produce the polymer emulsion particles.

The polymer emulsion particles disclosed herein may contain a polyoxyalkylene secondary alkyl ether in addition to the above-mentioned polymer and the compound having a sulfosuccinic acid (salt) backbone.

The polyoxyalkylene secondary alkyl ether disclosed herein may have one or two or more (poly)ethylene glycol chains, preferably one (poly)ethylene glycol chain.

The polyoxyalkylene secondary alkyl ether disclosed herein preferably contains an organic group having 3 or more carbon atoms. Examples of the organic group having 3 or more carbon atoms include hydrocarbon groups such as

alkyl groups, alkenyl groups, and alkynyl groups, each having 3 or more carbon atoms. Among these, alkyl groups having 3 or more carbon atoms are preferred. The organic group may further contain an organic substituent such as an alkoxy group, an aryl group, an alkylsulfonyl group, an arylsulfonyl group, an arylalkylsulfonyl group, a trialkylsilyl group, a dialkylarylsilyl group, an alkyldiarylsilyl group, a triarylsilyl group, a bis(dialkylamino)phosphanyl group, a bis(dialkylamino)phosphinoyl group, a dialkylphosphanyl group, a dialkylphosphinoyl group, a diarylphosphanyl group, or a diarylphosphinoyl group. The number of carbon atoms of the organic group (preferably a hydrocarbon group) is preferably 5 or more, more preferably 8 or more, still more preferably 10 or more, particularly preferably 12 or more. The number of carbon atoms is preferably 30 or less, more preferably 24 or less, still more preferably 18 or less, particularly preferably 14 or less.

The polyoxyalkylene secondary alkyl ether disclosed herein is preferably a secondary alcohol ethoxylate represented by the following formula (3):

[Chem. 3]

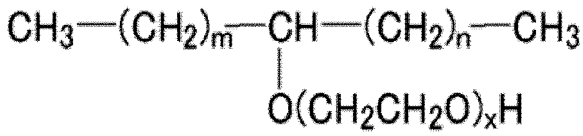

(3)

wherein m and n are each an integer of 0 or more; and x is the average number of moles of ethylene oxide added and is 3 to 200.

In the formula (3), m and n are each preferably 1 or more, more preferably 2 or more, still more preferably 3 or more, particularly preferably 4 or more. A preferred range of the value of m + n in the formula (3) is designed such that the total number of carbon atoms of the hydrocarbon group represented by $CH_3$-$(CH_2)_m$-CH-$(CH_2)_n$-$CH_3$ falls within the above-described preferred range of the number of carbon atoms of the organic group. The value of m + n is preferably 2 or more, more preferably 5 or more, still more preferably 7 or more, particularly preferably 9 or more. The number of carbon atoms is preferably 27 or less, more preferably 21 or less, still more preferably 15 or less, particularly preferably 11 or less. A preferred range of x in the formula (3) is the same as the above-described preferred range of the average number n of moles of ethylene oxide added constituting the (poly)ethylene glycol chain.

The polyoxyalkylene secondary alkyl ether disclosed herein can be obtained by a conventionally known method such as by adding ethylene oxide or the like to a hydroxy group of a secondary alcohol. The compound may be a commercial product. Examples of the commercial product include SOFTANOL M series such as SOFTANOL 90, SOFTANOL 120, SOFTANOL 200, and SOFTANOL 400 and SOFTANOL L series such as SOFTANOL L90 (each available from Nippon Shokubai Co., Ltd.).

The polyoxyalkylene secondary alkyl ether disclosed herein may be used as an emulsifier to produce the polymer emulsion particles.

The polymer emulsion particles disclosed herein preferably has a glass transition temperature of -20°C or higher, more preferably -15°C or higher, still more preferably -10°C or higher. The glass transition temperature is preferably 40°C or lower, more preferably 35°C or lower, still more preferably 30°C or lower. The glass transition temperature of the polymer emulsion particles disclosed herein refers to the glass transition temperature of the polymer(s) that forms the polymer emulsion particles. The glass transition temperature (Tg) can be calculated by the method disclosed in the EXAMPLES described below. When at least one type of the emulsions disclosed herein is prepared by multistage polymerization (e.g., when it is polymer emulsion particles having a core and a shell), the glass transition temperature means Tg (total Tg) determined based on the formulations of monomers used in all the stages.

When at least one type of the polymer emulsion particles disclosed herein is in the form of a composite of two or more polymer chains, the glass transition temperature of one of the polymer chains (e.g., the polymer chain in the core) is preferably 0°C or higher, more preferably 10°C or higher. The glass transition temperature of the one of the polymer chains is preferably 60°C or lower, more preferably 50°C or lower. The glass transition temperature of the other polymer chain (e.g., the polymer chain in the shell) is preferably -30°C or higher, more preferably -20°C or higher. The glass transition temperature of the other polymer chain is preferably 30°C or lower, more preferably 20°C or lower. The difference in glass transition temperature between one of the polymer chains and the other polymer chain is preferably 5°C or more, more preferably 10°C or more, still more preferably 20°C or more. The difference in glass transition temperature is preferably 60°C or less, more preferably 50°C or less, still more preferably 40°C or less. Providing such a difference in glass transition temperature is expected, in damping material applications, for example, to impart higher damping properties over a wide temperature range and to further improve damping properties in particular in a practical range of 20°C to 60°C.

The polymer emulsion particles disclosed herein preferably have a weight average molecular weight of 18000 or more, more preferably 20000 or more, still more preferably 22000 or more, particularly preferably 24000 or more. The weight average molecular weight is preferably 300000 or less, more preferably 200000 or less, still more preferably

100000 or less. The weight average molecular weight of the polymer emulsion particles refers to the weight average molecular weight of the polymer(s) forming the polymer emulsion particles. The weight average molecular weight (Mw) can be measured using GPC under the conditions disclosed in the EXAMPLES described below.

The average particle size of the polymer emulsion particles disclosed herein is preferably 80 nm or more, more preferably 100 nm or more. The average particle size is preferably 450 nm or less, more preferably 400 nm or less, still more preferably 350 nm or less. The average particle size of the polymer emulsion particles can be measured by the method disclosed in the EXAMPLES described below. Use of such polymer emulsion particles disclosed herein, which have an average particle size within the above range, is expected to satisfy the basic performance requirements for a damping material, such as coating appearance and coatability, and to further enhance the damping properties.

The minimum film-forming temperature of the polymer emulsion particles disclosed herein is preferably 0°C or higher, more preferably 5°C or higher. The minimum film-forming temperature is preferably 40°C or lower, more preferably 35°C or lower, still more preferably 30°C or lower.

To allow the polymer emulsion particles disclosed herein to have a damping design suitable for a practical temperature range as a damping material application and to improve film formability in low-temperature drying, the polymer emulsion particles preferably have a difference between the glass transition temperature of the polymer emulsion particles and the minimum film-forming temperature of the polymer emulsion particles (|(glass transition temperature of polymer emulsion particles) - (minimum film-forming temperature of polymer emulsion particles)|) of 9°C or less, more preferably 7°C or less, still more preferably 5°C or less.

The minimum film-forming temperature of the polymer emulsion particles is measured by the method described in the EXAMPLES.

The polymer emulsion particles disclosed herein are preferably dispersed in a solvent, and more preferably dispersed in an aqueous solvent from the viewpoint of improving the working environment. The phrase "dispersed in a solvent" means being dispersed in the solvent without being dissolved.

The aqueous solvent disclosed herein may contain an organic solvent as long as it contains water, but is preferably water. The amount of water in 100 parts by mass of the aqueous solvent is preferably 80 parts by mass or more, more preferably 90 parts by mass or more, still more preferably 95 parts by mass or more, and may be 100 parts by mass.

The percentage of the non-volatile component (non-volatile content) in the resin composition for damping materials of the present disclosure is preferably 55.0% by mass or more, more preferably 57% by mass or more, still more preferably 60% by mass or more, based on the resin composition for damping materials. The non-volatile content is preferably 80% by mass or less, and may be 70% by mass or less. The non-volatile content herein can be determined by known methods and can be determined in the following way, for example. About 1 g of the resin composition for damping materials is weighed and dried in a hot air dryer at 150°C for one hour, and the ratio of the dry residue as a non-volatile component to the mass of the composition before drying is calculated as percentage by mass.

The amount of the compound having a sulfosuccinic acid (salt) backbone in 100 parts by mass of the non-volatile component in the resin composition for damping materials of the present disclosure is preferably 0.1 parts by mass or more, more preferably 0.3 parts by mass or more, still more preferably 0.5 parts by mass or more, particularly preferably 1 part by mass or more. The amount of the compound having a sulfosuccinic acid (salt) backbone is preferably 30 parts by mass or less, more preferably 20 parts by mass or less, still more preferably 10 parts by mass or less, particularly preferably 8 parts by mass or less.

The amount of the sulfosuccinic acid half ester (salt) in 100 parts by mass of the non-volatile component in the resin composition for damping materials of the present disclosure is preferably 0.1 parts by mass or more, more preferably 0.3 parts by mass or more, still more preferably 0.5 parts by mass or more, particularly preferably 1 part by mass or more. The amount of the sulfosuccinic acid half ester (salt) is preferably 30 parts by mass or less, more preferably 20 parts by mass or less, still more preferably 10 parts by mass or less, particularly preferably 8 parts by mass or less.

The amount of the polyoxyalkylene secondary alkyl ether in 100 parts by mass of the non-volatile component in the resin composition for damping materials of the present disclosure is preferably 0.1 parts by mass or more, more preferably 0.5 parts by mass or more, still more preferably 1 part by mass or more, particularly preferably 2 parts by mass or more. The amount of the polyoxyalkylene secondary alkyl ether is preferably 30 parts by mass or less, more preferably 20 parts by mass or less, still more preferably 10 parts by mass or less, particularly preferably 8 parts by mass or less.

The resin composition for damping materials of the present disclosure preferably has a viscosity of 10 mPa·s or higher, more preferably 30 mPa·s or higher, still more preferably 50 mPa·s or higher. The viscosity is preferably 5000 mPa·s or lower, more preferably 3500 mPa·s or lower, still more preferably 2000 mPa·s or lower. The viscosity of the resin composition for damping materials herein is measured using a B-type rotational viscometer at 25°C and 20 rpm.

<Method for producing resin composition for damping material>

The resin composition for damping materials of the present disclosure may be produced by any method and is preferably produced by emulsion polymerization using an emulsifier. Alternatively, it may be produced by a method other

than emulsion polymerization, for example, a method for forming polymer emulsion particles by allowing an emulsifier to act on a polymer obtained by suspension polymerization.

The method for producing the resin composition for damping materials of the present disclosure includes, for example, a polymerization step. The polymerization step preferably includes adding an emulsifier to a reaction liquid derived from a monomer emulsion. In other words, the method for producing the resin composition for damping materials of the present disclosure may be a method for producing a resin composition for damping materials, the method including a polymerization step of emulsion polymerization using a monomer emulsion containing a monomer component and an emulsifier, the polymerization step including adding an emulsifier to a polymerization reaction liquid containing an unreacted portion of the monomer component and the initially contained emulsifier.

Providing new micelles (reaction fields for emulsion polymerization formed by the emulsifier) to the unreacted portion of the monomer component enables generation of a second peak component during polymerization.

Since an unreacted portion of the monomer component is essential, the emulsifier is added to the polymerization reaction liquid in which a sufficient unreacted portion of the monomer component remains during the polymerization step.

The emulsion polymerization disclosed herein may be performed in any way. For example, the polymerization may be performed by appropriately adding a monomer component and a polymerization initiator to an aqueous medium in the presence of an emulsifier and/or a protective colloid. An agent such as a polymerization chain transfer agent is also preferably used to adjust the molecular weight. For example, the polymerization step preferably includes adding a polymerization chain transfer agent to a reaction liquid derived from a monomer emulsion. In other words, the polymerization step preferably includes adding a polymerization chain transfer agent to a polymerization reaction liquid containing an unreacted portion of the monomer component and the initially contained emulsifier.

When the polymer contained in the polymer emulsion particles is polymer emulsion particles having a core and a shell, the polymer emulsion particles are preferably obtained by a multi-stage polymerization in which the core is formed by emulsion-polymerizing a monomer component in an aqueous medium in the presence of an emulsifier and/or a protective colloid, and then the shell is formed by emulsion-polymerizing a monomer component to an emulsion containing the core.

Examples of the emulsifier disclosed herein include an anionic emulsifier, a cationic emulsifier, a nonionic emulsifier, an amphoteric emulsifier, and a polymeric emulsifier. One or more of these may be used.

The anionic emulsifier disclosed herein is preferably, but not limited to, the above-mentioned compound having a sulfosuccinic acid (salt) backbone. Examples of the anionic emulsifier other than the compound having a sulfosuccinic acid (salt) backbone include polyoxyalkylene alkyl ether sulfate salts, polyoxyalkylene oleyl ether sulfate sodium salts, polyoxyalkylene alkyl phenyl ether sulfate salts, alkyl diphenyl ether disulfonate salts, polyoxyalkylene (mono-, di-, tri-)styryl phenyl ether sulfate salts, polyoxyalkylene (mono-, di-, tri-)benzyl phenyl ether sulfate salts, sodium dodecyl polyglycol ether sulfate; sodium sulforicinoleate; alkyl sulfonates such as sulfonated paraffin salts; alkyl sulfonates such as sodium dodecylbenzenesulfonate and alkali metal sulfates of alkali phenol hydroxyethylene; high alkyl naphthalenesulfonate salts; naphthalenesulfonic acid-formaldehyde condensates; fatty acid salts such as sodium laurate, triethanolamine oleate, and triethanolamine abietate; polyoxyalkyl ether sulfate salts; polyoxyethylene carboxylic acid ester sulfate salts; polyoxyethylene phenyl ether sulfate salts; and polyoxyethylene alkylaryl sulfate salts. One or more of these may be used.

The amount of the compound having a sulfosuccinic acid (salt) backbone in 100 parts by mass of the anionic emulsifier disclosed herein is preferably 80 parts by mass or more, more preferably 90 parts by mass or more, still more preferably 95 parts by mass or more, and may be 100 parts by mass.

The nonionic emulsifier disclosed herein is preferably, but not limited to, the above-mentioned polyoxyalkylene secondary alkyl ether. Examples of the nonionic emulsifier other than the polyoxyalkylene secondary alkyl ether include polyoxyethylene alkyl ethers; polyoxyethylene alkylaryl ethers; sorbitan aliphatic esters; polyoxyethylene sorbitan aliphatic esters; aliphatic monoglycerides such as glycerol monolaurate; polyoxyethylene oxypropylene copolymers; condensation products of ethylene oxide with aliphatic amines, amides, or acids, and the like.

The amount of the polyoxyalkylene secondary alkyl ether in 100 parts by mass of the nonionic emulsifier disclosed herein is preferably 80 parts by mass or more, more preferably 90 parts by mass or more, still more preferably 95 parts by mass or more, and may be 100 parts by mass.

Non-limiting examples of the cationic emulsifier disclosed herein include dialkyl dimethyl ammonium salts, ester-type dialkyl ammonium salts, amide-type dialkyl ammonium salts, and dialkylimidazolinium salts. One or more of these may be used.

Non-limiting examples of the amphoteric emulsifier disclosed herein include alkyl dimethyl amino acetic acid betaines, alkyl dimethyl amine oxides, alkyl carboxymethyl hydroxyethyl imidazolinium betaines, alkyl amidopropyl betaines, and alkyl hydroxysulfobetaines. One or more of these may be used.

Non-limiting examples of the polymer emulsifier disclosed herein include polyvinyl alcohol and modified products thereof; (meth)acrylic water-soluble polymers; hydroxyethyl (meth)acrylic water-soluble polymers; hydroxypropyl (meth)acrylic water-soluble polymers; and polyvinylpyrrolidone. One or more of these may be used.

The polymerization initiator disclosed herein may be any substance that decomposes when exposed to heat to

generate radical molecules. A water-soluble initiator is preferably used. Examples of the polymerization initiator include persulfates such as potassium persulfate, ammonium persulfate, and sodium persulfate; water-soluble azo compounds such as 2,2'-azobis(2-amidinopropane) dihydrochloride and 4,4'-azobis(4-cyanopentanoic acid); thermal decomposition initiators such as hydrogen peroxide; and redox polymerization initiators such as a combination of hydrogen peroxide and ascorbic acid, a combination of t-butyl hydroperoxide and rongalite, a combination of potassium persulfate and a metal salt, and a combination of ammonium persulfate and sodium hydrogen sulfite. One or more of these may be used.

The amount of the polymerization initiator disclosed herein used may be any amount and is appropriately set depending on the type of the polymerization initiator and the like. The amount is preferably, for example, 0.1 to 2 parts by mass, more preferably 0.2 to 1 part by mass, relative to 100 parts by mass of the total amount of the monomer component(s) used to form the polymer.

The polymerization initiator disclosed herein can be used in combination with a reducing agent as necessary in order to promote emulsion polymerization. Examples of the reducing agent include reducing organic compounds such as ascorbic acid, tartaric acid, citric acid, and glucose; and reducing inorganic compounds such as sodium thiosulfate, sodium sulfite, sodium bisulfite, sodium metabisulfite, sodium hydrogen sulfite, and thiourea dioxide. One or more of these may be used.

The amount of the reducing agent disclosed herein used may be any amount, and is preferably, for example, 0.05 to 1 part by mass relative to 100 parts by mass of the total amount of the monomer component(s) used to form the polymer.

When the resin composition for damping materials is formed, the molar ratio of the polymerization initiator to the reducing agent disclosed herein (polymerization initiator/reducing agent) is preferably 1.0 to 2.0, more preferably 1.2 to 1.9, to prevent the decomposition of an isothiazolin compound, which serves as a surface modifier.

Non-limiting examples of the polymerization chain transfer agent disclosed herein include alkyl mercaptans such as hexyl mercaptan, octyl mercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptoalkyl carboxylic acid esters such as 2-ethylhexyl mercaptoacetate, 2-ethylhexyl mercaptopropionate, and tridecyl mercaptopropionate; alkoxyalkyl mercaptocarboxylic acid esters such as methoxybutyl mercaptoacetate and methoxybutyl mercaptopropionate; mercaptoalkyl esters of carboxylic acids such as 2-mercaptoethyl octanoate; $\alpha$-methylstyrene dimer; terpinolene; $\alpha$-terpinene; $\gamma$-terpinene; dipentene; anisole; and allyl alcohol. These may be used alone or in combination of two or more. Of these, alkyl mercaptans such as hexyl mercaptan, octyl mercaptan, n-dodecyl mercaptan, t-dodecyl mercaptan, n-hexadecyl mercaptan, and n-tetradecyl mercaptan are preferred.

The amount of the polymerization chain transfer agent disclosed herein used is, for example, preferably 0.1 to 1.0% by mass, more preferably 0.3 to 0.8% by mass, relative to 100% by mass of the total monomer component(s).

Regarding the polymerization conditions such as emulsion polymerization conditions in the method for producing a resin composition for damping materials of the present disclosure, the polymerization temperature is preferably, but not limited to, 0°C to 100°C, more preferably 40°C to 95°C, for example. The polymerization time is preferably, but not limited to, 1 to 15 hours, more preferably 5 to 10 hours, for example.

The monomer component(s), polymerization initiator, and the like disclosed herein may be added by any method such as a batch addition method, a continuous addition method, or a multi-stage addition method. These addition methods may be combined as appropriate.

The emulsion polymerization conditions in the method for producing a resin composition for damping materials of the present disclosure may include a polymerization step of polymerizing a monomer component.

The polymerization step disclosed herein may include an initial polymerization step, a dropwise addition step, and an aging step after the dropwise addition step.

The initial polymerization step disclosed herein refers to the first stage of the three stages of the emulsion polymerization method generally consisting of an initial polymerization step, a dropwise addition step, and an aging step, and refers to a step of performing polymerization for a certain period of time using a monomer emulsion containing a solvent, an emulsifier, and a monomer component.

The monomer component in the initial polymerization step disclosed herein may have any formulation, but may have a formulation similar to that of the monomer component in the dropwise addition step.

With regard to the monomer emulsion to be used in the polymerization step disclosed herein, each component may be added separately, or a monomer emulsion (also called a pre-emulsion) containing a solvent, an emulsifier, and a monomer component may be produced and used.

The polymerization step in the method for producing a resin composition for damping materials of the present disclosure may include: an initial polymerization step in which part of a monomer emulsion is placed in a reaction vessel and then emulsion-polymerized; a dropwise addition step in which the remaining monomer emulsion is added dropwise to the polymerization reaction liquid; and an aging step in which heating is performed for a certain period of time after the dropwise addition of the monomer emulsion is completed.

The method for producing a resin composition for damping materials of the present disclosure preferably includes adding an emulsifier separately from the emulsifier used in the monomer emulsion. This step is expected to easily

provide the resin composition for damping materials with multiple peaks. The adding an emulsifier separately from the emulsifier used in the monomer emulsion is also called a post-emulsifier addition step.

The polymerization step disclosed herein preferably further includes adding a polymerization chain transfer agent, more preferably includes, for example, adding a polymerization chain transfer agent simultaneously with the post-emulsifier addition step. This step is expected to provide particles having multiple peaks but having a uniform molecular weight.

Herein, the emulsifier used in the monomer emulsion is referred to as an emulsifier A, and the emulsifier added separately from the emulsifier A is referred to as an emulsifier B.

The emulsifier A disclosed herein may be any of the emulsifiers described above.

The emulsifier B disclosed herein may be any of the emulsifiers described above, and is preferably an anionic emulsifier, more preferably a compound having a sulfosuccinic acid (salt) backbone, still more preferably a sulfosuccinic acid half ester (salt).

In the method for producing a resin composition for damping materials of the present disclosure, the emulsifier B may be added during the dropwise addition or after completion of the dropwise addition of the monomer emulsion, and is preferably added after completion of the dropwise addition.

The emulsifier B may be added once or multiple times.

When the emulsifier B is added during the dropwise addition of the monomer emulsion, it is preferably added in a range of a degree of polymerization of the monomer emulsion of more than 45%, more preferably more than 50%. The upper limit of the degree of polymerization may be 90% or may be 85%.

When the emulsifier B is added during the dropwise addition of the monomer emulsion, it is preferably added for not less than 50%, more preferably not less than 60%, of the total dropwise addition time of the monomer emulsion, and may be added for not less than 80% or not less than 90% of the total dropwise addition time of the monomer emulsion.

When the emulsifier B is added after completion of the dropwise addition of the monomer emulsion, it is preferably added within 30 minutes, more preferably within 20 minutes, still more preferably within 10 minutes after completion of the dropwise addition.

In the method for producing a resin composition for damping materials of the present disclosure, the mass ratio of emulsifier A to emulsifier B (mass of emulsifier A/mass of emulsifier B) is preferably 4.0/1.0 to 0.5/1.0, more preferably 3.0/1.0 to 0.6/1.0, still more preferably 2.0/1.0 to 0.8/1.0.

Herein, the polymerization chain transfer agent used in the monomer emulsion is referred to as a polymerization chain transfer agent A, and the polymerization chain transfer agent added separately from the polymerization chain transfer agent A is referred to as a polymerization chain transfer agent B.

The preferred timing of addition, number of additions, and addition time of the polymerization chain transfer agent B are the same as the preferred timing of addition, number of additions, and addition time of the emulsifier B described above.

In the method for producing a resin composition for damping materials of the present disclosure, the mass ratio of polymerization chain transfer agent A to polymerization chain transfer agent B (mass of polymerization chain transfer agent A/mass of polymerization chain transfer agent B) is preferably 20.0/1.0 to 1.0/1.0, more preferably 10.0/1.0 to 1.5/1.0, still more preferably 5.0/1.0 to 2.0/1.0.

In the method for producing a resin composition for damping materials of the present disclosure, the emulsion produced by emulsion polymerization is preferably neutralized with a neutralizing agent. This will stabilize the emulsion.

The neutralizing agent disclosed herein may be any neutralizing agent. To provide a coating having improved properties such as water resistance made of the resin composition for damping materials essentially containing a (meth) acrylic polymer emulsion, the neutralizing agent is preferably a volatile base that volatilizes upon heating the coating. To make the heat drying properties better and improve the damping properties, the neutralizing agent is more preferably an amine having a boiling point of 80°C to 360°C. Suitable examples of the neutralizing agent include tertiary amines such as triethanolamine, 2-methylaminoethanol, dimethylethanolamine, diethylethanolamine, and morpholine, and diglycolamine. The neutralizing agent is more preferably an amine having a boiling point of 130°C to 280°C. The boiling point refers to a boiling point at atmospheric pressure.

<Coating material for damping material>

The resin composition for damping materials of the present disclosure may be combined with other components to form a coating material for damping materials. Such a coating material for damping materials that contains the resin composition for damping materials as an essential component can form a damping material that exhibits excellent damping properties and includes a coating with excellent strength.

The coating material for damping materials disclosed herein refers to a coating material containing at least both the resin composition for damping materials of the present invention and a filler.

Examples of the filler disclosed herein include inorganic fillers such as calcium carbonate, kaolin, silica, talc,

barium sulfate, alumina, iron oxide, titanium oxide, glass stearate, magnesium carbonate, aluminum hydroxide, diatomaceous earth, and clay; scaly inorganic fillers such as glass flakes and mica; and fibrous inorganic fillers such as metal oxide whiskers and glass fibers.

When the filler disclosed herein is a particulate filler, the average particle size of the filler is preferably 0.5 to 50 μm. The average particle size is more preferably 2 to 25 μm. Examples of the particulate filler include calcium carbonate and titanium oxide.

The coating material for damping materials disclosed herein may contain a different component in addition to the filler.

Examples of the different component to be contained in the coating material for damping materials disclosed herein include a foaming agent, a pigment, a thickener, a solvent, an aqueous crosslinking agent, a gelling agent, a dispersant, a defoamer, a colorant, an anti-rust pigment, a plasticizer, a stabilizer, a wetting agent, a preservative, an anti-foaming agent, an anti-aging agent, an anti-fungal agent, an ultraviolet absorber, and an antistatic agent. One or more of these may be used.

The different component disclosed herein can be mixed with the resin composition for damping materials, etc., using, for example, a butterfly mixer, a planetary mixer, a spiral mixer, a kneader, or a dissolver.

Preferred examples of the foaming agent disclosed herein include a thermally expandable capsule containing a low-boiling point hydrocarbon, an organic foaming agent, and an inorganic foaming agent. One or more of these may be used. Examples of the thermally expandable capsule include Matsumoto Microsphere F-30 and F-50 (Matsumoto Yushi-Seiyaku Co., Ltd.) and Expancel WU642, WU551, WU461, DU551, and DU401 (Nippon Expancel Co., Ltd.). Examples of the organic foaming agent include azodicarbonamide, azobisisobutyronitrile, N,N-dinitrosopentamethylenetetramine, p-toluenesulfonylhydrazine, and p-oxybis(benzenesulfohydrazide). Examples of the inorganic foaming agent include sodium bicarbonate, ammonium carbonate, and silicon hydride.

Examples of the thickener disclosed herein include polyvinyl alcohol, cellulose derivatives, and polycarboxylic acid resins.

Examples of the solvent disclosed herein include ethylene glycol, butyl cellosolve, butyl carbitol, butyl carbitol acetate, and water. The amount of the solvent to be contained is appropriately set so that the concentration of the non-volatile component in the resin composition for damping materials in the coating material for damping materials falls within the above-mentioned range.

Preferred examples of the aqueous crosslinking agent disclosed herein include oxazoline compounds such as EPOCROS WS-500, WS-700, K-2010, 2020, and 2030 (all trade names, Nippon Shokubai Co., Ltd.); epoxy compounds such as ADEKA RESIN EMN-26-60 and EM-101-50 (all trade names, Adeka Corporation); melamine compounds such as Cymel C-325 (trade name, Mitsui Cytec Ltd.); blocked isocyanate compounds; and zinc oxide compounds such as AZO-50 (trade name, 50% by mass aqueous zinc oxide dispersion, Nippon Shokubai Co., Ltd.) .

Examples of the gelling agent disclosed herein include starch and agar.

Examples of the dispersant disclosed herein include inorganic dispersants such as sodium hexametaphosphate and sodium tripolyphosphate, and organic dispersants such as polycarboxylic acid-based dispersants.

Examples of the defoamer disclosed herein include silicon-based defoamers.

Examples of the colorant disclosed herein include organic or inorganic colorants such as carbon black, red iron oxide, hansa yellow, benzidine yellow, phthalocyanine blue, and quinacridone red.

Examples of the antirust pigment disclosed herein include metal phosphates, metal molybdates, and metal borates.

Also, a polyvalent metal compound may be used as the different component disclosed herein. In this case, the polyvalent metal compound improves the stability, dispersibility, and heat drying properties of the coating material for damping materials, as well as the damping properties of a damping material formed from the coating material for damping materials. Non-limiting examples of the polyvalent metal compound include zinc chloride and zinc sulfate. One or more of these may be used.

The coating material for damping materials disclosed herein preferably has a non-volatile content of 55% by mass or more, more preferably 65% by mass or more, still more preferably 75% by mass or more. The non-volatile content is preferably 92% by mass or less, and may be 87% by mass or less.

The amount of the resin composition for damping materials to be contained in the coating material for damping materials disclosed herein is preferably set so that the non-volatile component in the resin composition for damping materials is 10 to 60% by mass, more preferably 15 to 60% by mass, of 100% by mass of the non-volatile component in the coating material for damping materials.

The coating material for damping materials disclosed herein preferably has a pH of 7 to 11, more preferably 7 to 9. The pH can be measured at 25°C using a pH meter (HORIBA, Ltd. "F-23").

The amount of the filler disclosed herein to be contained is preferably 50 to 700% by mass, more preferably 100 to 550% by mass, relative to 100% by mass of the non-volatile component in the resin composition for damping materials.

The amount of the foaming agent disclosed herein to be contained is preferably 0.4 to 8.0% by mass relative to

100% by mass of the non-volatile components in the resin composition for damping materials, to provide a damping material coating satisfying the cross-sectional porosity. The amount of the foaming agent is more preferably 0.6 to 7.0% by mass, still more preferably 0.8 to 6.0% by mass, particularly preferably 1.0 to 5.0% by mass.

The amount of the thickener disclosed herein to be contained is preferably 0.01 to 2% by mass, more preferably 0.05 to 1.5% by mass, still more preferably 0.1 to 1% by mass, in terms of non-volatile component, relative to 100% by mass of the non-volatile component in the resin composition for damping materials.

The amount of the aqueous crosslinking agent disclosed herein to be contained is, for example, preferably 0.01 to 20% by mass, more preferably 0.15 to 15% by mass, still more preferably 0.5 to 15% by mass, in terms of non-volatile component, relative to 100% by mass of the non-volatile component in the resin composition for damping materials.

<Damping material>

The coating material for damping materials disclosed herein may be applied to a substrate and dried to form a coating serving as a damping material, for example. The coating material for damping materials may be applied to a substrate by using, for example, a brush, a spatula, an air spray, an airless spray, a mortar gun, a lysine gun, or the like.

The damping material coating disclosed herein preferably has an average film thickness of 1 to 5 mm. The damping material coating disclosed herein can exhibit excellent damping properties at any film thickness. To allow the coating to have excellent damping properties and excellent strength, the average film thickness is more preferably 1.5 to 4.5 mm.

The average film thickness of the coating disclosed herein can be determined by measuring the film thicknesses of random 10 points with a caliper and averaging the thicknesses.

The coating material is also preferably applied so that the surface density of the coating after drying is 1.0 to 7.0 $kg/m^2$, more preferably 2.0 to 6.0 $kg/m^2$. Here, the coating material for damping materials disclosed herein can provide a coating that resists expansion or cracking during and after drying and is less likely to slide off on inclined surfaces.

The surface density of the coating disclosed herein can be calculated from the coating area and the dry weight of the applied coating.

After applying the coating material for damping materials disclosed herein, the coating material may be dried by heating or dried at room temperature to form a coating. Since the coating material for damping materials disclosed herein has excellent low-temperature drying properties, the coating material may be dried at 150°C or lower, 130°C or lower, 120°C or lower, or 110°C or lower. The coating material may be dried at 50°C to 100°C.

When the resin composition for damping materials or the coating material for damping materials disclosed herein is used for damping material applications, the damping properties can be evaluated by measuring the loss factor of a film formed from the resin composition for damping materials or the coating material for damping materials.

The loss factor disclosed herein is usually represented by $\eta$, and indicates the degree of attenuation of the vibration applied to the damping material. The higher the loss factor, the better the damping performance.

The loss factor disclosed herein is commonly measured by a resonance method in which measurement is performed near the resonance frequency. Examples thereof include a half-width method, a damping rate method, and a mechanical impedance method. The loss factor of the film formed from the resin composition for damping materials or the coating material for damping materials is preferably measured by a resonance method (3 dB method) using a cantilever beam. The measurement using a cantilever beam can be carried out, for example, using a CF-5200 FFT analyzer made by Ono Sokki Co., Ltd.

The damping material disclosed herein has excellent damping properties and can be used in a variety of applications, and also has excellent strength with suppressed coating peeling and the like. The damping material is suitable for uses where application-type damping materials are used, such as automobiles, railway vehicles, ships, aircraft, electrical equipment, building structures, and construction equipment. In particular, the damping material is suitable for vehicle applications such as automobiles and railway vehicles.

EXAMPLES

The following description is offered to demonstrate the present invention based on embodiments of the present invention. The embodiments should not be construed as limiting the present invention. Unless otherwise mentioned, the term "part(s)" means "part(s) by mass" and "%" means "% by mass".

In the following examples and comparative examples, various resin properties were evaluated as follows.

<Non-volatile content (N.V.)>

About 1 g of the resulting emulsion was weighed and dried in a hot air dryer at 150°C for one hour. Thereafter, the ratio of the dry residue as a non-volatile component to the mass of the emulsion before drying was expressed as percent by

mass.

<Viscosity>

The viscosity was measured at 25°C and 20 rpm using a B-type rotational viscometer ("VISCOMETER TUB-10" available from Toki Sangyo Co., Ltd.).

<Average particle size>

The cumulant average particle size of the emulsion particles was measured using a particle size distribution analyzer (Otsuka Electronics Co., Ltd., FPAR-1000) by dynamic light scattering.

<Particle size distribution>

The particle size distribution (vol%) of the emulsion particles was measured using a particle size distribution analyzer (Beckman Coulter, Inc., LS13320) by laser diffraction scattering in the particle size range of 0 to 10000 nm.

The number of peaks in the obtained particle size distribution was defined as the number of particle diameter distribution peaks. The particle diameter distribution peak with the largest peak intensity was defined as a first peak, the particle diameter distribution peak with the next largest peak intensity was defined as a second peak, and other peaks were defined in the same way. The particle sizes at the tops of the particle diameter distribution peaks were successively allocated to the particle size of the first peak, the particle size of the second peak, and the particle sizes of other peaks.

In addition, the total volume percentage (vol%) of the second peak and peaks lower than the second peak in the entire particle size distribution was calculated.

<Weight average molecular weight Mw, number average molecular weight Mn>

The Mw and Mn were measured by gel permeation chromatography (GPC) under the following conditions.

Measuring equipment: HLC-8120GPC (trade name, Tosoh Corporation)
Molecular-weight column: TSK-GEL GMHXL-L and TSK-GEL G5000HXL (both produced by Tosoh Corporation) connected in series
Eluent: Tetrahydrofuran (THF)
Calibration curve reference material: Polystyrene (Tosoh Corporation)
Measuring method: The material to be measured was dissolved in THF so that the solid content was about 0.2% by mass, and the solution was filtered through a filter. The filtrate was used as a measurement sample, and the molecular weight thereof was measured.

<Molecular weight distribution Mw/Mn>

The weight average molecular weight Mw was divided by the number average molecular weight Mn (weight average molecular weight Mw/number average molecular weight Mn) to calculate the molecular weight distribution Mw/Mn.

<Glass transition temperature (Tg) of polymer>

The Tg of the polymer was calculated from the formulations of the monomers used in the stages using the following calculation formula (1):

[Math. 1]

$$\frac{1}{Tg'} = \left[ \frac{W_1'}{T_1} + \frac{W_2'}{T_2} + \cdot \cdot \cdot + \frac{W_n'}{T_n} \right] \qquad (1)$$

wherein Tg' represents Tg (absolute temperature) of a polymer; W1', W2', ..., and Wn' each represent the mass fraction of each monomer relative to the total monomer components; and T1, T2, ..., and Tn each represent the glass transition

temperature (absolute temperature) of the homopolymer of each monomer.

The Tg calculated from the formulations of the monomers used in all the stages was expressed as "total Tg".

The following shows the glass transition temperatures (Tg) of the homopolymers of the respective polymerizable monomers, which were used to calculate the Tg based on the calculation formula (1).

Methyl methacrylate (MMA): 105°C
Styrene (St): 100°C
2-Ethylhexyl acrylate (2EHA): -70°C
Butyl acrylate (BA): -56°C
Acrylic acid (AA): 95°C

<Minimum film-forming temperature>

The minimum film-forming temperature of the emulsion was measured as follows. The emulsion was applied to a glass plate set on a thermal gradient tester (TP-801 LT type, made by Tester Sangyo Co,. Ltd.) to a thickness of 0.2 mm, followed by drying. The temperature at which cracks occurred was measured.

The following describes the surfactants used in the below-described examples.

A compound (sulfosuccinic acid half ester (i)) was used as a sulfosuccinic acid half ester, the compound being represented by the following formula (4):

[Chem. 4]

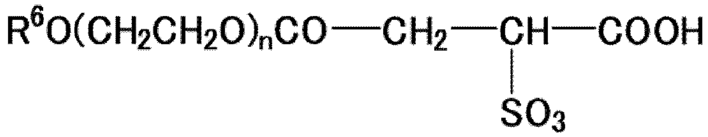

(4)

wherein $R^6$ represents a C12-C14 secondary alkyl group and n represents the average number of moles added.

A polyoxyethylene alkyl ether was used as a polyoxyalkylene secondary alkyl ether, the polyoxyethylene alkyl ether being made by Nippon Shokubai Co., Ltd. (secondary alcohol ethoxylate (ii)), which was a surfactant in which the mole number of EO added was 20 and the alkyl group of the secondary alcohol had 12 to 14 carbon atoms.

Levenol WX made by Kao Corporation was used as a sodium polyoxyethylene alkyl ether sulfate.

(Example 1)

A polymerization vessel equipped with a stirrer, a reflux condenser, a thermometer, a nitrogen inlet tube, and a dropping funnel was charged with 235.0 parts of deionized water. Thereafter, the internal temperature was increased to 75°C while stirring under a nitrogen gas flow. Meanwhile, the dropping funnel was charged with a monomer emulsion consisting of 565.0 parts of styrene, 420.0 parts of 2-ethylhexyl acrylate, 15.0 parts of acrylic acid, 6.5 parts of t-dodecyl mercaptan (also referred to as t-DM) as a polymerization chain transfer agent, 12.1 parts of a 50% aqueous solution of sulfosuccinic acid half ester (i) previously prepared, 22.5 parts of a 20% aqueous solution of a secondary alcohol ethoxylate (ii) previously prepared, and 150.0 parts of deionized water. Next, while maintaining the internal temperature of the polymerization vessel at 75°C, 12.0 parts of the monomer emulsion and as polymerization initiators (oxidants) 10 parts of a 2.5% aqueous ammonium persulfate solution and 10 parts of a 2% aqueous sodium hydrogen sulfite solution were added to start initial polymerization. After 40 minutes, while maintaining the temperature inside the reaction system at 75°C, the remaining monomer emulsion was uniformly added dropwise over 300 minutes. At the same time, 70 parts of a 2.5% aqueous ammonium persulfate solution and 30 parts of a 2% aqueous sodium hydrogen sulfite solution were uniformly added dropwise over 300 minutes. After the dropwise addition was completed, 13.2 parts of a 50% aqueous solution of sulfosuccinic acid half ester (i) previously prepared was added to the reaction system. The same temperature was maintained for 120 minutes, and the resulting reaction liquid was cooled to room temperature. Then, 18.6 parts of 2-dimethylethanolamine was added to obtain an acrylic emulsion (resin composition 1 for damping materials) having a glass transition temperature of 3.0°C, a non-volatile content of 64.9%, a viscosity of 541 mPa·s, an average particle size of 503 nm, and a weight average molecular weight of 25000.

(Example 2)

An acrylic emulsion (resin composition 2 for damping materials) was obtained as in Example 1, except that, in the

monomer emulsion in Example 1, the amount of styrene was changed from 565.0 parts to 505.0 parts and the amount of 2-ethylhexyl acrylate was changed from 420.0 parts to 480.0 parts. The acrylic emulsion had a glass transition temperature of -7.0°C, a non-volatile content of 65.0%, a viscosity of 527 mPa·s, an average particle size of 508 nm, and a weight average molecular weight of 25000.

(Example 3)

An acrylic emulsion (resin composition 3 for damping materials) was obtained as in Example 1, except that, in the monomer emulsion in Example 1, the amount of styrene was changed from 565.0 parts to 620.0 parts and the amount of 2-ethylhexyl acrylate was changed from 420.0 parts to 365.0 parts. The acrylic emulsion had a glass transition temperature of 13.0°C, a non-volatile content of 64.9%, a viscosity of 485 mPa·s, an average particle size of 505 nm, and a weight average molecular weight of 25000.

(Example 4)

A polymerization vessel equipped with a stirrer, a reflux condenser, a thermometer, a nitrogen inlet tube, and a dropping funnel was charged with 235.0 parts of deionized water. Thereafter, the internal temperature was increased to 75°C while stirring under a nitrogen gas flow. Meanwhile, the dropping funnel was charged with a monomer emulsion consisting of 245.0 parts of styrene, 149.0 parts of 2-ethylhexyl acrylate, 6.0 parts of acrylic acid, 2.6 parts of t-dodecyl mercaptan (also referred to as t-DM) as a polymerization chain transfer agent, 4.8 parts of a 50% aqueous solution of sulfosuccinic acid half ester (i) previously prepared, 9.0 parts of a 20% aqueous solution of a secondary alcohol ethoxylate (ii) previously prepared, and 60.0 parts of deionized water.

Next, while maintaining the internal temperature of the polymerization vessel at 75°C, 12.0 parts of the monomer emulsion and as polymerization initiators (oxidants) 10 parts of a 2.5% aqueous ammonium persulfate solution and 10 parts of a 2% aqueous sodium hydrogen sulfite solution were added to start initial polymerization. After 40 minutes, while maintaining the temperature inside the reaction system at 75°C, the remaining monomer emulsion was uniformly added dropwise over 100 minutes. At the same time, 25 parts of a 2.5% aqueous ammonium persulfate solution and 11 parts of a 2% aqueous sodium hydrogen sulfite solution were uniformly added dropwise over 100 minutes. After completion of the dropwise addition, the same temperature was maintained for 60 minutes to obtain an aqueous dispersion of an acrylic copolymer having a glass transition temperature of 11.3°C for a core of emulsion particles having a multilayer structure.

Next, the dropping funnel was charged with a monomer emulsion consisting of, as monomers for a shell, 276.0 parts of styrene 315.0 parts of butyl acrylate, 9.0 parts of acrylic acid, 3.9 parts of t-DM, 7.3 parts of a 50% aqueous solution of sulfosuccinic acid half ester (i) previously prepared, 13.5 parts of a 20% aqueous solution of a secondary alcohol ethoxylate (ii) previously prepared, and 90.0 parts of deionized water. The monomer emulsion was uniformly added dropwise to the aqueous dispersion of the acrylic copolymer obtained above over 180 minutes. At the same time, 45 parts of a 2.5% aqueous ammonium persulfate solution and 19 parts of a 2% aqueous sodium hydrogen sulfite solution were uniformly added dropwise to the aqueous dispersion of the acrylic copolymer over 180 minutes. After the dropwise addition was completed, 13.2 parts of a 50% aqueous solution of sulfosuccinic acid half ester (i) previously prepared was added to the reaction system. Thereafter, the same temperature was maintained for 120 minutes to form a shell having a glass transition temperature of -2.2°C. The obtained reaction liquid was cooled to room temperature, and 18.6 parts of 2-dimethylethanolamine was added to obtain an acrylic emulsion (resin composition 4 for damping materials) having a glass transition temperature of 3.0°C, a non-volatile content of 65.2%, a viscosity of 680 mPa·s, an average particle size of 510 nm, and a weight average molecular weight of 25000.

(Example 5)

An acrylic emulsion (resin composition 5 for damping materials) was obtained as in Example 1, except that the amount of styrene was changed from 565.0 parts to 264.5 parts and the amount of 2-ethylhexyl acrylate was changed from 420.0 parts to 228.0 parts in the monomer emulsion in Example 1, 264.5 parts of methyl methacrylate and 228.0 parts of butyl acrylate were further added as monomers, and 13.2 parts of the aqueous solution of sulfosuccinic acid half ester (i) was added 270 minutes after the start of the dropwise addition instead of being added after completion of the dropwise addition. The acrylic emulsion had a glass transition temperature of 3.0°C, a non-volatile content of 65.1%, a viscosity of 857 mPa·s, an average particle size of 518 nm, and a weight average molecular weight of 25000.

(Example 6)

An acrylic emulsion (resin composition 6 for damping materials) was obtained as in Example 1, except that, in the monomer emulsion in Example 1, the amount of t-dodecyl mercaptan was changed from 6.5 parts to 2.0 parts. The acrylic

emulsion had a glass transition temperature of 3.0°C, a non-volatile content of 64.8%, a viscosity of 391 mPa·s, an average particle size of 512 nm, and a weight average molecular weight of 200000.

(Example 7)

An acrylic emulsion (resin composition 7 for damping materials) was obtained as in Example 5, except that 13.2 parts of the aqueous solution of sulfosuccinic acid half ester (i) was added 240 minutes after the start of the dropwise addition instead of being added dropwise 270 minutes after the start of the dropwise addition. The acrylic emulsion had a glass transition temperature of 3.0°C, a non-volatile content of 65.1%, a viscosity of 1308 mPa·s, an average particle size of 384 nm, and a weight average molecular weight of 25000.

(Example 8)

An acrylic emulsion (resin composition 8 for damping materials) was obtained as in Example 5, except that 13.2 parts of the aqueous solution of sulfosuccinic acid half ester (i) was added 195 minutes after the start of the dropwise addition instead of being added dropwise 270 minutes after the start of the dropwise addition. The acrylic emulsion had a glass transition temperature of 3.0°C, a non-volatile content of 65.1%, a viscosity of 4020 mPa·s, an average particle size of 262 nm, and a weight average molecular weight of 25000.

(Example 9)

An acrylic emulsion (resin composition 9 for damping materials) was obtained as in Example 1, except that the amount of deionized water charged in the polymerization vessel in Example 1 was changed from 235.0 parts to 365.0 parts. The acrylic emulsion had a glass transition temperature of 3.0°C, a non-volatile content of 60.0%, a viscosity of 108 mPa·s, an average particle size of 507 nm, and a weight average molecular weight of 25000.

(Example 10)

An acrylic emulsion (resin composition 10 for damping materials) was obtained as in Example 1, except that the amount of t-dodecyl mercaptan was changed from 6.5 parts to 5.8 parts in the monomer emulsion in Example 1, and 0.7 parts of t-dodecyl mercaptan was added simultaneously with 13.2 parts of the aqueous solution of sulfosuccinic acid half ester (i) after completion of the dropwise addition. The acrylic emulsion had a glass transition temperature of 3.0°C, a non-volatile content of 65.0%, a viscosity of 498 mPa·s, an average particle size of 504 nm, and a weight average molecular weight of 23000.

(Example 11)

An acrylic emulsion (resin composition 11 for damping materials) was obtained as in Example 10, except that, in the monomer emulsion in Example 10, the amount of t-dodecyl mercaptan was changed from 5.8 parts to 5.0 parts, and the amount of t-dodecyl mercaptan added after completion of the dropwise addition was changed from 0.7 parts to 1.5 parts. The acrylic emulsion had a glass transition temperature of 3.0°C, a non-volatile content of 64.9%, a viscosity of 512 mPa·s, an average particle size of 507 nm, and a weight average molecular weight of 21000.

(Example 12)

An acrylic emulsion (resin composition 12 for damping materials) was obtained as in Example 5, except that the amount of t-dodecyl mercaptan was changed from 6.5 parts to 5.8 parts in the monomer emulsion in Example 5, and 0.7 parts of t-dodecyl mercaptan was added simultaneously with 13.2 parts of the aqueous solution of sulfosuccinic acid half ester (i) after completion of the dropwise addition. The acrylic emulsion had a glass transition temperature of 3.0°C, a non-volatile content of 64.9%, a viscosity of 773 mPa·s, an average particle size of 521 nm, and a weight average molecular weight of 23000.

(Comparative Example 1)

A polymerization vessel equipped with a stirrer, a reflux condenser, a thermometer, a nitrogen inlet tube, and a dropping funnel was charged with 480.0 parts of deionized water. Thereafter, the internal temperature was increased to 75°C while stirring under a nitrogen gas flow. Meanwhile, the dropping funnel was charged with a monomer emulsion consisting of 565.0 parts of styrene, 420.0 parts of 2-ethylhexyl acrylate, 15.0 parts of acrylic acid, 6.5 parts of t-dodecyl

mercaptan (also referred to as t-DM) as a polymerization chain transfer agent, 200.0 parts of a 20% aqueous solution of sodium polyoxyethylene alkyl ether sulfate (iii) previously prepared, and 190.0 parts of deionized water. Next, while maintaining the internal temperature of the polymerization vessel at 75°C, 40.0 parts of the monomer emulsion and as polymerization initiators (oxidants) 10 parts of a 2.5% aqueous ammonium persulfate solution and 10 parts of a 2% aqueous sodium hydrogen sulfite solution were added to start initial polymerization. After 40 minutes, while maintaining the temperature inside the reaction system at 75°C, the remaining monomer emulsion was uniformly added dropwise over 300 minutes. At the same time, 70 parts of a 2.5% aqueous ammonium persulfate solution and 30 parts of a 2% aqueous sodium hydrogen sulfite solution were uniformly added dropwise over 300 minutes. The same temperature was maintained for 120 minutes, and the resulting reaction liquid was cooled to room temperature. Then, 18.6 parts of 2-dimethylethanolamine was added to obtain an acrylic emulsion (comparative resin composition 1) having a glass transition temperature of 3.0°C, a non-volatile content of 52.0%, a viscosity of 285 mPa·s, an average particle size of 150 nm, and a weight average molecular weight of 25000.

(Comparative Example 2)

An acrylic emulsion (comparative resin composition 2) was obtained as in Example 1, except that the aqueous solution of sulfosuccinic acid half ester (i) added after completion of the dropwise addition in Example 1 was not used. The acrylic emulsion had a glass transition temperature of 3.0°C, a non-volatile content of 65.3%, a viscosity of 11524 mPa·s, an average particle size of 701 nm, and a weight average molecular weight of 25000.

Tables 1 and 2 show the formulations of the resin compositions 1 to 12 for damping materials in Examples 1 to 12 and the comparative resin compositions 1 and 2 in Comparative Examples 1 and 2 and the properties of the polymers.

In Examples 10 to 12, the molecular weight of the polymer was made uniform by adding a chain transfer agent together with an emulsifier.

In Tables 1 and 2 below, the number of particle diameter distribution peaks indicates the number of peaks in the particle size distribution of the resin composition for damping materials measured using a particle size distribution analyzer by dynamic light scattering, as described above. The "particle size of large size particle component" represents the particle size at the top of the first peak. The "particle size of small size particle component" represents the particle size at the top of the second peak. The "percentage of small size particle component" represents the total volume percentage of the second peak and peaks lower than the second peak in the entire particle size distribution of the resin composition for damping materials. The "percentage of completion during monomer dropwise addition time" represents the timing at which an emulsifier or a combination of an emulsifier and a chain transfer agent is added, expressed as a percentage (%) of the elapsed dropwise addition time relative to the total dropwise addition time of the monomer emulsion.

[Table 1]

| | | | Example 1 | Example 2 | Example 3 | Example 4 | Example 5 | Example 6 | Example 7 | Example 8 |
|---|---|---|---|---|---|---|---|---|---|---|
| | | | Resin composition 1 for damping material | Resin composition 2 for damping material | Resin composition 3 for damping material | Resin composition 4 for damping material | Resin composition 5 for damping material | Resin composition 6 for damping material | Resin composition 7 for damping material | Resin composition 8 for damping material |
| Core | Emulsifier (% by mass /monomer) | Sulfosuccinic acid half ester (i) | 0.60 | 0.60 | 0.60 | 0.60 | 0.60 | 0.60 | 0.60 | 0.60 |
| | | Secondary alcohol ethoxylate (ii) | 0.45 | 0.45 | 0.45 | 0.45 | 0.45 | 0.45 | 0.45 | 0.45 |
| | | Sodium polyoxyethylene alkyl ether sulfate | - | - | - | - | - | - | - | - |
| | Monomer (parts) | 2EHA | 420 | 480 | 365 | 149 | 228 | 420 | 228 | 228 |
| | | BA | 0 | 0 | 0 | 0 | 228 | 0 | 228 | 228 |
| | | St | 565 | 505 | 620 | 245 | 264.5 | 565 | 264.5 | 264.5 |
| | | MMA | 0 | 0 | 0 | 0 | 264.5 | 0 | 264.5 | 264.5 |
| | | AA | 15 | 15 | 15 | 6 | 15 | 15 | 15 | 15 |
| | Chain transfer agent | t-DM | 6.5 | 6.5 | 6.5 | 2.6 | 6.5 | 20 | 6.5 | 6.5 |
| | Tg (°C) | | 3 | -7 | 13 | 11.3 | 3 | 3 | 3 | 3 |

(continued)

| | | | Example 1 | Example 2 | Example 3 | Example 4 | Example 5 | Example 6 | Example 7 | Example 8 |
|---|---|---|---|---|---|---|---|---|---|---|
| | | | Resin composition 1 for damping material | Resin composition 2 for damping material | Resin composition 3 for damping material | Resin composition 4 for damping material | Resin composition 5 for damping material | Resin composition 6 for damping material | Resin composition 7 for damping material | Resin composition 8 for damping material |
| Shell | Emulsifier (% by mass /monomer) | Sulfosuccinic acid half ester (i) | - | - | - | 0.9 | - | - | - | - |
| | | Secondary alcohol ethoxylate (ii) | - | - | - | 0.7 | - | - | - | - |
| | Monomer (parts) | 2EHA | - | - | - | 0 | - | - | - | - |
| | | BA | - | - | - | 315 | - | - | - | - |
| | | St | - | - | - | 276 | - | - | - | - |
| | | MMA | - | - | - | 0 | - | - | - | - |
| | | AA | - | - | - | 9 | - | - | - | - |
| | Chain transfer agent | t-DM | - | - | - | 3.9 | - | - | - | - |
| | Tg (°C) | | - | - | - | -2.2 | - | - | - | - |
| Additional emulsifier (% by mass /monomer) | | Sulfosuccinic acid half ester (i) | 0.66 | 0.66 | 0.66 | 0.66 | 0.66 | 0.66 | 0.66 | 0.66 |
| Additional chain transfer agent Timing (%) of addition | | t-DM | 0.0 | 0.0 | 0.0 | 0.0 | 0.0 | 0.0 | 0.0 | 0.0 |
| | | *Percentage of completion during monomer dropwise addition time | 100 | 100 | 100 | 100 | 90 | 100 | 80 | 65 |

(continued)

| | | Example 1 | Example 2 | Example 3 | Example 4 | Example 5 | Example 6 | Example 7 | Example 8 |
|---|---|---|---|---|---|---|---|---|---|
| | | Resin composition 1 for damping material | Resin composition 2 for damping material | Resin composition 3 for damping material | Resin composition 4 for damping material | Resin composition 5 for damping material | Resin composition 6 for damping material | Resin composition 7 for damping material | Resin composition 8 for damping material |
| Physical properties of polymer | Non-volatile content (% by mass) | 64.9 | 65.0 | 64.9 | 65.2 | 65.1 | 64.8 | 65.1 | 65.1 |
| | Viscosity (mPa-s) | 541 | 527 | 485 | 680 | 857 | 391 | 1308 | 4020 |
| | Average particle size (nm) | 503 | 508 | 505 | 510 | 518 | 512 | 384 | 262 |
| | Number of particle size distribution peaks | 2 | 2 | 2 | 2 | 2 | 2 | 2 | 2 |
| | Particle size (nm) of large size particle component | 548 | 548 | 550 | 553 | 546 | 550 | 541 | 528 |
| | Particle size (nm) of small size particle component | 81 | 80 | 79 | 78 | 81 | 76 | 84 | 89 |
| | Percentage of small size particle component (%) | 10 | 10 | 10 | 10 | 10 | 10 | 15 | 30 |
| | Weight average molecular weight (Mw) | 25000 | 25000 | 25000 | 25000 | 25000 | 200000 | 25000 | 25000 |
| | Number average molecular weight (Mn) | 5300 | 5300 | 5300 | 5400 | 5200 | 42000 | 5300 | 5400 |
| | Molecular weight distribution (Mw/Mn) | 4.7 | 4.7 | 4.7 | 4.6 | 4.8 | 4.8 | 4.7 | 4.6 |
| | Total Tg (°C) | 3.0 | -7.0 | 13.0 | 3.0 | 3.0 | 3.0 | 3.0 | 3.0 |
| | Minimum film formation temperature (°C) | 20 | 0 or less | 120 | 20 | 20 | 3.0 | 3.0 | 5.0 |

[Table 2]

| | | | Example 9 | Example 10 | Example 11 | Example 12 | Comparative Example 1 | Comparative Example 2 | Comparative Example 3 |
|---|---|---|---|---|---|---|---|---|---|
| | | | Resin composition 9 for damping material | Resin composition 10 for damping material | Resin composition 11 for damping material | Resin composition 12 for damping material | Comparative resin composition 1 | Comparative resin composition 2 | Comparative resin composition 1 |
| Core | Emulsifier (% by mass /monomer) | Sulfosuccinic acid half ester (i) | 0.60 | 0.60 | 0.60 | 0.60 | - | 0.60 | - |
| | | Secondary alcohol ethoxylate (ii) | 0.45 | 0.45 | 0.45 | 0.45 | - | 0.45 | - |
| | | Sodium polyoxyethylene alkyl ether sulfate | - | - | - | - | 4 | - | 4 |
| | Monomer (parts) | 2EHA | 420 | 420 | 420 | 228 | 420 | 420 | 420 |
| | | BA | 0 | 0 | 0 | 228 | 0 | 0 | 0 |
| | | St | 565 | 565 | 565 | 264.5 | 565 | 565 | 565 |
| | | MMA | 0 | 0 | 0 | 264.5 | 0 | 0 | 0 |
| | | AA | 15 | 15 | 15 | 15 | 15 | 15 | 15 |
| | Chain transfer agent | t-DM | 6.5 | 5.8 | 5.0 | 5.8 | 6.5 | 6.5 | 6.5 |
| | Tg (°C) | | 3 | 3 | 3 | 3 | 3 | 3 | 3 |

(continued)

| | | | Example 9 | Example 10 | Example 11 | Example 12 | Comparative Example 1 | Comparative Example 2 | Comparative Example 3 |
|---|---|---|---|---|---|---|---|---|---|
| | | | Resin composition 9 for damping material | Resin composition 10 for damping material | Resin composition 11 for damping material | Resin composition 12 for damping material | Comparative resin composition 1 | Comparative resin composition 2 | Comparative resin composition 1 |
| Shell | Emulsifier (% by mass /monomer) | Sulfosuccinic acid half ester (i) | - | - | - | - | - | - | - |
| | | Secondary alcohol ethoxylate (ii) | - | - | - | - | - | - | - |
| | Monomer (parts) | 2EHA | - | - | - | - | - | - | - |
| | | BA | - | - | - | - | - | - | - |
| | | St | - | - | - | - | - | - | - |
| | | MMA | - | - | - | - | - | - | - |
| | | AA | - | - | - | - | - | - | - |
| | Chain transfer agent | t-DM | - | - | - | - | - | - | - |
| | Tg (°C) | | - | - | - | - | - | - | - |
| Additional emulsifier (% by mass /monomer) | | Sulfosuccinic acid half ester (i) | 0.66 | 0.66 | 0.66 | 0.66 | - | - | - |
| Additional chain transfer agent Timing (%) of addition | | t-DM | 0.0 | 0.7 | 1.5 | 0.7 | 0.0 | 0.0 | 0.0 |
| | | *Percentage of completion during monomer dropwise addition time | 100 | 100 | 100 | 100 | - | - | - |

(continued)

| | | Example 9 | Example 10 | Example 11 | Example 12 | Comparative Example 1 | Comparative Example 2 | Comparative Example 3 |
|---|---|---|---|---|---|---|---|---|
| | | Resin composition 9 for damping material | Resin composition 10 for damping material | Resin composition 11 for damping material | Resin composition 12 for damping material | Comparative resin composition 1 | Comparative resin composition 2 | Comparative resin composition 1 |
| Physical properties of polymer | Non-volatile content (% by mass) | 60.0 | 65.0 | 64.9 | 64.9 | 52.0 | 65.3 | 52.0 |
| | Viscosity (mPa·s) | 108 | 498 | 512 | 773 | 285 | 11524 | 285 |
| | Average particle size (nm) | 507 | 504 | 507 | 521 | 150 | 701 | 150 |
| | Number of particle size distribution peaks | 2 | 2 | 2 | 2 | 1 | 1 | 1 |
| | Particle size (nm) of large size particle component | 551 | 550 | 551 | 556 | 150 | 701 | 150 |
| | Particle size (nm) of small size particle component | 80 | 82 | 81 | 80 | - | - | - |
| | Percentage of small size particle component (%) | 10 | 10 | 10 | 10 | - | - | - |
| | Weight average molecular weight (Mw) | 25000 | 23000 | 21000 | 23000 | 25000 | 25000 | 25000 |
| | Number average molecular weight (Mn) | 5300 | 9000 | 9500 | 8800 | 9800 | 9800 | 9800 |
| | Molecular weight distribution (Mw/Mn) | 4.7 | 2.6 | 2.2 | 2.6 | 2.6 | 2.6 | 2.6 |
| | Total Tg (°C) | 3.0 | 3.0 | 3.0 | 3.0 | 3.0 | 3.0 | 3.0 |
| | Minimum film formation temperature (°C) | 2.0 | 1.0 | 1.0 | 1.0 | 12.0 | 12.0 | 12.0 |

<Preparation of coating material for damping materials and coating materials of Comparative Examples 1 and 2>

Coating materials 1 to 12 for damping materials and comparative coating materials 1 and 2 were prepared using the resin compositions 1 to 12 for damping materials and the comparative resin compositions 1 and 2 according to the following formulation, and evaluated for various properties.

- Each of resin compositions 1 to 12 for damping materials and comparative resin compositions 1 and 2 as is: 1000 parts
- Calcium carbonate NN#200*1: 1600 parts
- Dispersant AQUALIC DL-40S*2: 20 parts
- Thickener ACRYSET WR-650*3: 25 parts
- Defoamer Nopco 8034L*4: 3 parts
- Foaming agent F-30*5: 10 parts

<Preparation of coating material of Comparative Example 3>

A comparative coating material 3 as Comparative Example 3 was prepared using the comparative resin composition 1 according to the following formulation and evaluated for various properties.

- Comparative resin composition 1 as is: 1000 parts
- Calcium carbonate NN#200*1: 2300 parts
- Dispersant AQUALIC DL-40S*2: 20 parts
- Thickener ACRYSET WR-650*3: 25 parts
- Defoamer Nopco 8034L*4: 3 parts
- Foaming agent F-30*5: 10 parts

*1: Filler available from Nitto Funka Kogyo K.K.
*2: Polycarboxylic acid type dispersant (active ingredient: 44%) made by Nippon Shokubai Co., Ltd.
*3: Alkali-soluble acrylic thickener (active ingredient: 30%) available from Nippon Shokubai Co., Ltd.
*4: Defoamer (main components: hydrophobic silicone + mineral oil) available from San Nopco Ltd.
*5: Foaming agent available from Matsumoto Yushi-Seiyaku Co., Ltd.

<Evaluation of appearance of coating>

Evaluation of degree of occurrence of peeling, swelling, and cracking of coating
The prepared coating material was applied to a steel plate (trade name: SPCC-SD, 75 mm in width × 150 mm in length × 0.8 mm in thickness, Nippon Testpanel Co., Ltd.) to a thickness of 4 mm. Thereafter, the coating material was dried in a hot air dryer at 110°C for 30 minutes. The condition of the surface of the resulting dried coating was evaluated by the occurrence of peeling, swelling, and cracking.

<Evaluation of solid content of coating>

Evaluation of low-temperature drying properties of coating
The initial solid content of the coating material was calculated as a theoretical value from the water content of each component.
The prepared coating material was applied to a steel plate (trade name: SPCC-SD, 75 mm in width × 150 mm in length × 0.8 mm in thickness, Nippon Testpanel Co., Ltd.) to a thickness of 4 mm, dried at 110°C for 30 minutes or at 80°C for 30 minutes, and then left to stand at room temperature for half a day to obtain a coating. The solid content of the coating under each drying condition was calculated from the water loss of the coating.

<Damping test>

The prepared coating material for damping materials was applied to a cold-rolled steel plate (trade name: SPCC, 15 mm in width × 250 mm in length × 1.5 mm in thickness, Nippon Testpanel Co., Ltd.) to a thickness of 3 mm and predried at 80°C for 30 minutes, followed by drying at 150°C for 30 minutes. Thereby, a coating for damping materials with a surface density of 4.0 $kg/m^2$ was formed on the cold-rolled steel plate.
The damping properties were evaluated by measuring the loss factor at each temperature (20°C, 35°C, 50°C) using a cantilever beam (loss factor measurement system available from Ono Sokki Co., Ltd.).
Tables 3 and 4 show properties of the coating materials 1 to 12 for damping materials and the comparative coating

materials 1 to 3.

[Table 3]

| | | Example 1 | Example 2 | Example 3 | Example 4 | Example 5 | Example 6 | Example 7 | Example 8 |
|---|---|---|---|---|---|---|---|---|---|
| | | Coating material 1 for damping material | Coating material 2 for damping material | Coating material 3 for damping material | Coating material 4 for damping material | Coating material 5 for damping material | Coating material 6 for damping material | Coating material 7 for damping material | Coating material 8 for damping material |
| | Resin composition used | Resin composition 1 for damping material | Resin composition 2 for damping material | Resin composition 3 for damping material | Resin composition 4 for damping material | Resin composition 5 for damping material | Resin composition 6 for damping material | Resin composition 7 for damping material | Resin composition 8 for damping material |
| Properties of coating | Ratio of pigment added (to resin composition as is) | 1.6 | 1.6 | 1.6 | 1.6 | 1.6 | 1.6 | 1.6 | 1.6 |
| | Initial non-volatile content of coating material (mass%) | 86 | 86 | 86 | 86 | 86 | 86 | 86 | 86 |
| | Dry at 110°C Peeling of coating | none | none | none | none | none | none | none | none |
| | Dry at 110°C Swelling of coating | none | none | none | none | none | none | none | none |
| | Dry at 110°C Cracking of coating | none | none | none | none | none | none | none | none |
| | Dry at 110°C Solid content at the time of finishing | 92 | 92 | 93 | 93 | 92 | 92 | 92 | 93 |
| | Dry at 80°C + at room temperature for half a day Solid content at the time of finishing | 92 | 92 | 92 | 92 | 91 | 92 | 91 | 92 |
| | Loss Factor at 20°C | 0.06 | 0.15 | 0.02 | 0.07 | 0.07 | 0.05 | 0.07 | 0.07 |
| | Loss Factor at 35°C | 0.16 | 0.07 | 0.08 | 0.14 | 0.14 | 0.15 | 0.14 | 0.14 |
| | Loss Factor at 50°C | 0.04 | 0.02 | 0.15 | 0.05 | 0.06 | 0.04 | 0.05 | 0.06 |

[Table 4]

| | | Example 9 | Example 10 | Example 11 | Example 12 | Comparative Example 1 | Comparative Example 2 | Comparative Example 3 |
|---|---|---|---|---|---|---|---|---|
| | | Coating material 9 for damping material | Coating material 10 for damping material | Coating material 11 for damping material | Coating material 12 for damping material | Comparative coating material 1 | Comparative coating material 2 | Comparative coating material 3 |
| | Resin composition used | Resin composition 9 for damping material | Resin composition 10 for damping material | Resin composition 11 for damping material | Resin composition 12 for damping material | Comparative resin composition 1 | Comparative resin composition 2 | Comparative resin composition 1 |
| Properties of coating | Ratio of pigment added (to resin composition as is) | 1.6 | 1.6 | 1.6 | 1.6 | 1.6 | 1.6 | 2.3 |
| | Initial non-volatile content of coating material (mass%) | 84 | 86 | 86 | 86 | 81 | 86 | 85 |
| | Dry at 110°C Peeling of coating | none | none | none | none | none | none | Coating was completely peeled off. |
| | Dry at 110°C Swelling of coating | none | none | none | none | none | Yes | - |
| | Dry at 110°C Cracking of coating | none | none | none | none | none | Yes | - |
| | Dry at 110°C Solid content at the time of finishing | 91 | 92 | 93 | 92 | 89 | 92 | - |
| | Dry at 80°C + at room temperature for half a day Solid content at the time of finishing | 90 | 92 | 92 | 92 | 87 | 92 | 91 |
| | Loss Factor at 20°C | 0.05 | 0.07 | 0.07 | 0.08 | 0.04 | 0.06 | 0.04 |
| | Loss Factor at 35°C | 0.15 | 0.17 | 0.18 | 0.15 | 0.12 | 0.16 | 0.1 |
| | Loss Factor at 50°C | 0.04 | 0.04 | 0.05 | 0.06 | 0.03 | 0.04 | 0.02 |

The results of Examples 1 to 12 described above demonstrate that the resin compositions for damping materials containing polymer emulsion particles and having multiple peaks in the particle size distribution measured using a particle size distribution analyzer by dynamic light scattering have sufficient damping properties when formed into a coating and also have very excellent low-temperature drying properties and coating stability.

## Claims

1. A resin composition for damping materials, the composition comprising polymer emulsion particles and having multiple peaks in a particle size distribution measured using a particle size distribution analyzer by dynamic light scattering.

2. The resin composition for damping materials according to claim 1,
wherein the resin composition has a first peak in a particle size range of 300 nm or more and 800 nm or less and a second peak in a particle size range of 50 nm or more and 150 nm or less.

3. The resin composition for damping materials according to claim 2,
wherein a total volume percentage of the second peak and peaks lower than the second peak in the entire particle size distribution is 3 vol% or higher and 50 vol% or lower.

4. The resin composition for damping materials according to any one of claims 1 to 3,
wherein the resin composition has a non-volatile content of 55.0% by mass or higher.

5. The resin composition for damping materials according to any one of claims 1 to 4,
wherein the resin composition has a viscosity at 25°C of 10 mPa·s or higher and 5000 mPa·s or lower.

6. The resin composition for damping materials according to any one of claims 1 to 5,
wherein the polymer emulsion particles contain at least one of a sulfosuccinic acid half ester or a salt thereof.

7. The resin composition for damping materials according to claim 6,
wherein the polymer emulsion particles further contain a polyoxyalkylene secondary alkyl ether.

8. The resin composition for damping materials according to any one of claims 1 to 7,
wherein the polymer emulsion particles have a weight average molecular weight of 18000 or more and 300000 or less.

9. A method for producing a resin composition for damping materials containing polymer emulsion particles, the method comprising:

   a polymerization step of emulsion polymerization using a monomer emulsion containing a monomer component and an emulsifier,
   the polymerization step including adding an emulsifier to a polymerization reaction liquid containing an unreacted portion of the monomer component and the initially contained emulsifier.

10. The method for producing a resin composition for damping materials according to claim 9,
wherein the emulsifier added to the polymerization reaction liquid is an anionic emulsifier.

11. The method for producing a resin composition for damping materials according to claim 9 or 10,
wherein a mass ratio of the emulsifier initially contained in the monomer emulsion to the emulsifier added to the polymerization reaction liquid other than the emulsifier initially contained in the monomer emulsion is 4.0/1.0 to 0.5/1.0.

12. The method for producing a resin composition for damping materials according to any one of claims 9 to 11,
wherein the polymerization step includes an initial polymerization step of emulsion polymerization using part of the monomer emulsion, a dropwise addition step of adding dropwise the remaining monomer emulsion to the polymerization reaction liquid, and an aging step after the dropwise addition step.

13. The method for producing a resin composition for damping materials according to claim 12,
wherein the adding an emulsifier is carried out in the dropwise addition step or the aging step.

**14.** The method for producing a resin composition for damping materials according to any one of claims 9 to 13, wherein the polymerization step comprises adding a polymerization chain transfer agent to the polymerization reaction liquid containing an unreacted portion of the monomer component and the initially contained emulsifier.

**15.** The method for producing a resin composition for damping materials according to claim 14,

wherein the monomer emulsion further comprises a polymerization chain transfer agent, and
a mass ratio of the polymerization chain transfer agent contained in the monomer emulsion to the polymerization chain transfer agent added to the polymerization reaction liquid other than the polymerization chain transfer agent contained in the monomer emulsion is 20.0/1.0 to 1.0/1.0.

## INTERNATIONAL SEARCH REPORT

International application No.
**PCT/JP2023/033489**

### A. CLASSIFICATION OF SUBJECT MATTER

***C08K 5/11***(2006.01)i; ***C08L 101/00***(2006.01)i; ***C08L 71/00***(2006.01)i; ***C09K 3/00***(2006.01)i; ***F16F 15/02***(2006.01)i
FI: C09K3/00 P; C08K5/11; C08L71/00 Z; C08L101/00; F16F15/02 Q

According to International Patent Classification (IPC) or to both national classification and IPC

### B. FIELDS SEARCHED

Minimum documentation searched (classification system followed by classification symbols)

C08K5/11; C08L101/00; C08L71/00; F16F15/02; C09K3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-270064 A (NIPPON SHOKUBAI CO LTD) 19 November 2009 (2009-11-19) claims, examples, comparative examples | 1-5, 8 |
| Y | claims, examples, comparative examples | 6 |
| A | claims, examples, comparative examples | 7, 9-15 |
| X | JP 2011-057829 A (NIPPON SHOKUBAI CO LTD) 24 March 2011 (2011-03-24) claims, examples, reference examples | 1, 4-5, 8 |
| Y | claims, examples, reference examples | 6 |
| A | claims, examples, reference examples | 2-3, 7, 9-15 |
| X | JP 2011-231184 A (NIPPON SHOKUBAI CO LTD) 17 November 2011 (2011-11-17) claims, examples, comparative examples | 1, 4-5, 8 |
| Y | claims, examples, comparative examples | 6 |
| A | claims, examples, comparative examples | 2-3, 7, 9-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/033489**

**C. DOCUMENTS CONSIDERED TO BE RELEVANT**

| Category* | Citation of document, with indication, where appropriate, of the relevant passages | Relevant to claim No. |
|---|---|---|
| X | JP 2004-277536 A (NIPPON SHOKUBAI CO LTD) 07 October 2004 (2004-10-07) claims, examples | 1, 4-5 |
| Y | claims, examples | 6 |
| A | claims, examples | 2-3, 7-15 |
| X | JP 2008-133357 A (DIC CORP) 12 June 2008 (2008-06-12) claims, examples, comparative examples | 1-2, 4-5 |
| Y | claims, examples, comparative examples | 6 |
| A | claims, examples, comparative examples | 3, 7-15 |
| X | JP 2005-029705 A (NIPPON ZEON CO LTD) 03 February 2005 (2005-02-03) comparative examples (paragraphs [0054]-[0055], [0059]) | 1, 9-11 |
| A | comparative examples (paragraphs [0054]-[0055], [0059]) | 2-8, 12-15 |
| X | JP 08-003249 A (KURARAY CO LTD) 09 January 1996 (1996-01-09) claims, paragraphs [0001], [0029], [0051], examples | 9-11 |
| A | claims, paragraphs [0001], [0029], [0051], examples | 1-8, 12-15 |
| Y | WO 2016/159047 A1 (NIPPON SHOKUBAI CO LTD) 06 October 2016 (2016-10-06) claims, paragraphs [0009]-[0010], examples | 6 |
| A | claims, paragraphs [0009]-[0010], examples | 1-5, 7-15 |
| A | WO 2007/023821 A1 (NIPPON SHOKUBAI CO LTD) 01 March 2007 (2007-03-01) paragraph [0047] | 1-15 |

Form PCT/ISA/210 (second sheet) (January 2015)

**INTERNATIONAL SEARCH REPORT**

International application No.
**PCT/JP2023/033489**

**Box No. III Observations where unity of invention is lacking (Continuation of item 3 of first sheet)**

This International Searching Authority found multiple inventions in this international application, as follows:

(Invention 1) Claims 1-8

The emulsion composition for damping materials containing two types of copolymers with different volume average particle diameters measured by a dynamic light scattering method is disclosed in document 1 (JP 2009-270064 A), especially examples 1-11, 13-14, and comparative examples 2-4. A mixture of two types of copolymers with different volume average particle diameters measured by a dynamic light scattering method is highly likely to have multiple peaks in the particle size distribution. Furthermore, based on the volume average particle diameter of each copolymer, the weight average molecular weight, the viscosity, and the mass ratio of the mixture of copolymers, it is likely that the emulsion composition for the damping materials described in Example 1 of Document 1 meets the provisions of claims 2-3, 5, and 8 of the present invention. Thus, claims 1-3, 5, and 8 lack novelty in light of document 1, and thus do not have a special technical feature. However, claim 4 dependent on claim 1 has the special technical feature in which the resin composition for damping material has "the non-volatile content of 55.0 mass% or more." Thus, claims 1-4 are classified as invention 1.

Also, claims 5-8 are dependent on claim 1 and inventively related to claim 1, and are thus classified as invention 1.

(Invention 2) Claims 9-15

It cannot be said that claims 9-15 have a special technical feature identical or corresponding to that of claim 4 classified as invention 1.

Furthermore, claims 9-15 are not substantially identical to or similarly closely related to any of the claims classified as invention 1.

Thus, claims 9-15 cannot be classified as invention 1.

In addition, claims 9-15 have the special technical feature of "a method for producing a resin composition for damping materials containing polymer emulsion particles, the producing method comprising a polymerization step for emulsion polymerizing, using a monomer emulsion, containing a monomer component and an emulsifier, wherein the polymerization step includes adding an emulsifier to a polymerization reaction liquid containing a non-reacting monomer component and an emulsifier." Thus, claims 9-15 are classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2023/033489**

| Patent document cited in search report | Publication date (day/month/year) | Patent family member(s) | Publication date (day/month/year) |
|---|---|---|---|
| JP 2009-270064 A | 19 November 2009 | (Family: none) | |
| JP 2011-057829 A | 24 March 2011 | (Family: none) | |
| JP 2011-231184 A | 17 November 2011 | (Family: none) | |
| JP 2004-277536 A | 07 October 2004 | US 2004/0229962 A1<br>claims, examples<br>EP 1457530 A1<br>KR 10-0690215 B1<br>CN 1530414 A | |
| JP 2008-133357 A | 12 June 2008 | (Family: none) | |
| JP 2005-029705 A | 03 February 2005 | (Family: none) | |
| JP 08-003249 A | 09 January 1996 | (Family: none) | |
| WO 2016/159047 A1 | 06 October 2016 | US 2018/0355193 A1<br>claims, paragraphs [0012]-[0014], examples<br>EP 3279285 A1<br>CN 107406749 A<br>JP 2017-48363 A<br>JP 2017-48364 A | |
| WO 2007/023821 A1 | 01 March 2007 | US 2007/0049697 A1<br>paragraph [0078]<br>EP 1930390 A1<br>KR 10-2008-0040011 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017048364 A